# EUROPEAN PATENT SPECIFICATION

(11) **EP 1 500 177 B1**
(45) Date of publication and mention of the grant of the patent: **07.07.2010**
(21) Application number: 03712534.1
(22) Date of filing: 09.04.2003
(51) Int. Cl.: H02J 1/08

(54) **CIRCUIT ARRANGEMENT FOR GENERATING DC VOLTAGES**
SCHALTUNGSANORDNUNG ZUR ERZEUGUNG VON GLEICHSPANNUNGEN
MONTAGE DE CIRCUIT POUR GENERER DES TENSIONS DE COURANT CONTINU

(30) Priority: 18.04.2002 DE 10217235
(43) Date of publication of application: 26.01.2005
(73) Proprietor: NXP B.V., 5656 AG Eindhoven (NL)
(72) Inventor: MUTH, Matthias, 52066 Aachen (DE)
(74) Representative: Schouten, Marcus Maria
(86) International application number: PCT/IB2003/001424
(87) International publication number: WO 2003/088458

(56) References cited:
- EP-A- 0 300 091
- US-A- 5 617 015
- US-A1- 2002 001 213
- US-B1- 6 307 757
- "MC33186 AUTOMOTIVE H-BRIDGE DRIVER" MOTOROLA DATA SHEET, 13 December 2000 (2000-12-13), pages 1-12, XP002260012

## Description

The invention relates to a circuit arrangement for vehicles for generating DC output voltages from at least one DC input voltage, wherein the DC output voltages are smaller than the DC input voltages. Voltage regulating means are provided, which generate the DC output voltages from the DC input voltage.

Such arrangements are widely used in the field of automobile electronics. Since the main power supply in motor cars will be increased from 12 volts to 42 volts in the years to come, the use of such circuit arrangements will be a problem because the voltage difference between the DC input voltage, which will then be nominally 42 volts and actually up to 58 volts, and the DC output voltages which as before are in a relatively low voltage range of, for example, 3 or 5 volts, will become too large.

To solve this problem, it is known from the state of the art to arrange a DC/DC converter preceding such circuit arrangements. This converter then supplies, for example, a voltage of 12 volts which approximately corresponds to the current power supply in vehicles. An essential drawback of this solution is, however, that this preceding DC/DC converter must be permanently activated so as to supply the circuit arrangements for generating the DC output voltage with energy. However, this is not acceptable in vehicles because the quiescent current consumption of such an arrangement would be too large.

Document US5617015A1 discloses a switching voltage regulator which provides multiple independently regulated outputs. A switch control independently monitors two or more voltage outputs and generates control signals for driving a main switch and two or more auxiliary switches to charge selective ones of the outputs which have fallen below their target voltages. Time sequencing techniques are utilized to control the switching of the auxiliary switches such that energy stored in an inductor is transferred to the appropriate voltage outputs. The switching voltage regulator may be implemented as an integrated circuit and may have various topologies, such as boost, buck, flyback or SEPIC.

Motorola data sheet of the integrated circuit MC33186 "Automotive H-bridge driver", shows an integrated circuit for automotive purposes which has four inputs that inhibit the operation of the power stage, as referred in the application. This inputs act upon a power stage located as final link in the power conversion chain. The integrated circuit is used to power a motor and the typical application layout places such a power stage between voltage regulator and the load.

The invention aims to provide a circuit arrangement which generates at least one DC output voltage from at least one DC input voltage, which circuit arrangement can also be used for vehicles having a relatively high power supply and produces a small quiescent current consumption in the deactivated state of the power supply.

This object is solved by the characteristic features defined by the circuit arrangement in claim 1.

In the arrangement according to the invention a DC/DC converter precedes the voltage regulating means that generate the DC output voltages. The relatively high DC input voltage is applied to the DC/DC converter. The DC/DC converter converts this DC input voltage into a lower DC voltage which, in turn, is converted by the voltage regulating means into the DC output voltage and whose value is controlled. Furthermore a control means is provided which supplies a control signal by means of which the DC/DC converter can be switched on or off.

It is thereby achieved that the DC/DC converter can be deactivated and does not consume any current, for example, in the idle state of the supply system.

Dependent on its layout, the circuit arrangement is universally suitable for different DC input voltages which may also be essentially larger than the DC output voltages. Only the layout of the DC/DC converter should be adapted accordingly.

In accordance with an embodiment of the invention, the DC input voltage may be advantageously used for energy supply of the arrangement. This ensures that, for example, the control in the circuit arrangement according to the invention is always active and is thus capable of switching the DC/DC converter on and off by means of the control signal.

In a further embodiment of the invention as defined in claim 2, the circuit arrangement may advantageously be realized on an integrated circuit, with the exception of the DC/DC converter which precedes this integrated circuit. In this configuration, the layout of the converter may be varied without affecting the integrated circuit. It can therefore be used universally for different applications.

These and other aspects of the invention are apparent from and will be elucidated with reference to the embodiments described hereinafter.

In the drawings:
Fig. 1 shows a first embodiment of the invention in which, with the exception of the voltage converter, the circuit arrangement according to the invention is built on an integrated circuit, and
Fig. 2 shows a second embodiment of the invention in which the overall circuit arrangement according to the invention is realized on an integrated circuit.

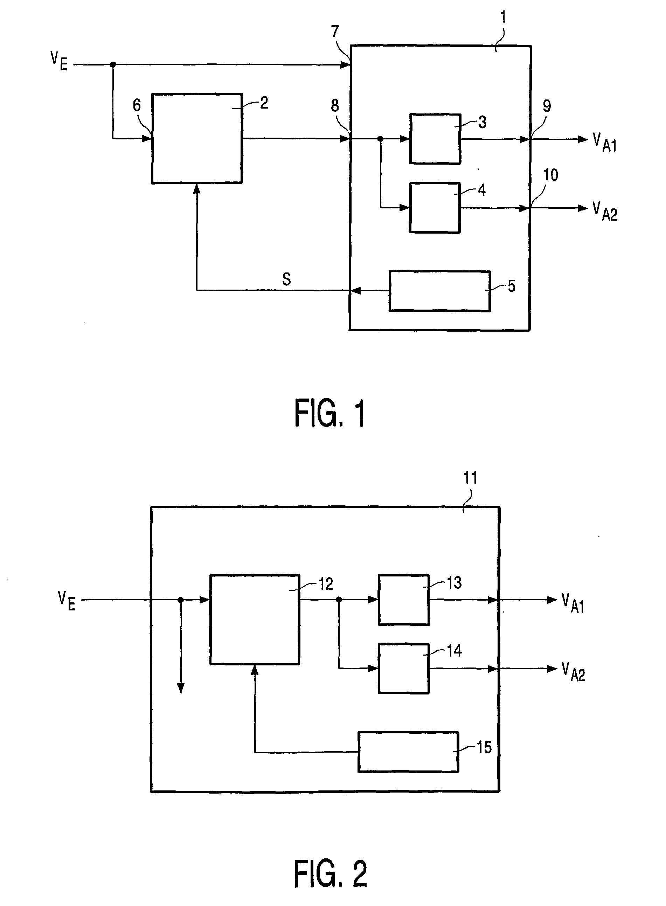

Fig. 1 is a block diagram of a first embodiment of the circuit arrangement according to the invention. With the exception of a voltage converter 2, the circuit arrangement is built on an integrated circuit 1.

The integrated circuit 1 comprises two voltage regulating means 3 and 4 and a control means 5.

At the input, the circuit arrangement receives a DC input voltage V_{E}, which may be, for example, a supply voltage for a vehicle. It will hereinafter be assumed that this supply voltage and hence the DC input voltage have a value of nominally about 42 volts, while fluctuations may occur within a range from about 30 to 58 volts.

This DC input voltage V_{E} is applied to an input 6 of the voltage converter 2. The voltage converter is implemented in such a way that it generates a DC output voltage of, for example, 12 volts or less from the DC input voltage of 42 volts, which DC output voltage is applied to an input 8 of the integrated circuit 1.

The DC voltage applied to the input 8 of the integrated circuit 1 is received within the integrated circuit at the inputs of two voltage regulating means 3 and 4 which generate controlled DC voltages at their output, which DC voltages are available as DC. output voltages V_{A1} and V_{A2} at outputs 9 and 10 and represent the DC output voltages of the circuit arrangement according to the invention. These DC output voltages may have values of, for example, 3 volts or 5 volts, i.e. they are significantly lower than the DC input voltage V_{E}.

The integrated circuit 1 further comprises a control means 5 which generates a switching signal S. In a further approach, not within the scope of the invention this switching signal may be provided, for example, for activating/deactivating external components and may thus be used for switching given components in the vehicle on and off.

In the embodiment shown in Fig. 1, the switching signal S is used to switch the voltage converter 2 on or off. This may be done, for example, in dependence on the operation of switching the supply system of the vehicle on or off.

In order that this should be possible, the DC input voltage V_{E}, which is constantly available, is directly applied to an input 7 of the integrated circuit 1 so that the integrated circuit 1 is always supplied with energy. The control means 5 may thus also be active at any time and can also control the DC/DC converter 2 by means of the switching signal S when the supply system is switched off.

This provides the essential advantage that the DC/DC converter 2 can be deactivated by means of the switching signal S in an idle state of the vehicle in which essential components should be switched off and in which a possibly smaller energy consumption in the supply system is desirable.

The control means 5 reactivates the voltage converter 2 by means of the switching signal S only when the DC output voltages V_{A1} and V_{A2} should be available again, i.e. when those circuit parts (not shown) of the vehicle that are supplied with these voltages should be reactivated, so that also the DC output voltages V_{A1} and V_{A2} are available again.
Fig. 2 shows a second embodiment of the invention which is similar as regards its circuitry to that shown in Fig. 1. However, in the second embodiment shown in Fig. 2, all components are completely integrated.
Fig. 2 shows an integrated circuit 11 with a voltage converter 12, two voltage regulating means 13 and 14 and a control means 15. These elements are connected in a comparable manner to the corresponding elements of the first embodiment shown in Fig. 1 and operate in the same way. However, there is an even further integration in this case.

The essential advantage of the circuit arrangement according to the invention, namely the small current consumption of the arrangement in the case of deactivated DC output voltages V_{A1} and V_{A2} is also obtained in this case, because the voltage converter 12 can be deactivated by means of a corresponding switching signal generated by the control means 15 in this second embodiment shown in Fig. 2.

## Claims

1. A circuit arrangement for vehicles for generating at least two DC output voltages (VA1, VA2) from at least one DC input voltage (VE),
wherein the DC output voltages (VA1, VA2) are smaller than the DC input voltage (VE);
the circuit arrangement comprising voltage regulating means (3,4) for generating the DC output voltages (VA1, VA2);
the DC input voltage (VE) being applied to a DC/DC converter (2; 12) and arranged to supply a lower voltage than the DC input voltage (VE) to the voltage regulating means;
the circuit arrangement comprising a control means (5);
the control means and voltage regulating means being built on an integrated circuit (1; 11);
wherein the control means in the integrated circuit (1; 11) is arranged to generate a switching signal (S) for switching on and off the DC/DC converter (2; 12),
and wherein the DC input voltage (VE) is directly applied to an input of the integrated circuit so that the integrated circuit is always supplied with energy.

2. A circuit arrangement as claimed in claim 1 wherein the DC/DC converter (2) is external to the integrated circuit (1).

3. A circuit arrangement as claimed in claim 1 wherein the DC/DC converter (12) is part of the integrated circuit (11).

4. A circuit arrangement as claimed in claims 1, 2 or 3, wherein the DC input voltage (VE) has a value of approximately 42 volts and the voltage supplied by the DC/DC converter (2; 12) has a value of approximately 12 volts.

## Patentansprüche

1. Schaltungsanordnung für Fahrzeuge zum Erzeugen wenigstens zweier Ausgangsgleichspannungen (VA1, VA2) aus wenigstens einer Eingangsgleichspannung (VE),
wobei die Ausgangsgleichspannungen (VA1, VA2) kleiner sind als die Eingangsgleichspannung (VE1);
wobei die Schaltungsanordnung Spannungsregelungsmittel (3, 4) zum Erzeugen der Ausgangsgleichspannungen (VA1, VA2) umfasst;
wobei 1 die Eingangsgleichspannung (VE) an einen Gleichspannungswandler (2; 12) angelegt wird, der so ausgeführt ist, dass den Spannungsregelungsmitteln eine niedrigere Spannung als die Eingangsgleichspannung (VE) zugeführt wird;
wobei die Schaltungsanordnung ein Steuermittel (5) umfasst;
wobei das Steuermittel und die Spannungsregelungsmittel auf einer integrierten Schaltung (1; 11) ausgeführt sind;
wobei das Steuermittel in der integrierten Schaltung (1; 11) so ausgeführt ist, dass es ein Schaltsignal (S) zum Einschalten und Ausschalten des Gleichspannungswandlers (2; 12) erzeugt,
und wobei die Eingangsgleichspannung (VE) direkt an einen Eingang der integrierten Schaltung angelegt wird, so dass die integrierte Schaltung immer mit Energie versorgt wird.

2. Schaltungsanordnung nach Anspruch 1, wobei sich der Gleichspannungswandler (2) außerhalb der integrierten Schaltung (1) befindet.

3. Schaltungsanordnung nach Anspruch 1 , wobei der Gleichspannungswandler (12) Teil der integrierten Schaltung (11) ist.

4. Schaltungsanordnung nach irgendeinem der Ansprüche 1, 2 oder 3, wobei die Eingangsgleichspannung (VE) einen Wert von ungefähr 42 Volt aufweist und von dem Gleichspannungswandler (2; 12) gelieferte Spannung einen Wert von ungefähr 12 Volt aufweist.

## Revendications

1. Agencement de circuit pour véhicules afin de générer au moins deux tensions de sortie continues (VA1, VA2) à partir d'au moins une tension d'entrée continue (VE),
dans lequel les tensions de sortie continues (VA1, VA2) sont plus petites que la tension d'entrée continue (VE) ;
l'agencement de circuit comprenant des moyens de régulation de tension (3, 4) pour générer les tensions de sortie continues (VA1, VA2) ;
la tension d'entrée continue (VE) étant appliquée à un convertisseur continu/continu (2 ; 12) et agencée de manière à fournir une tension plus faible que la tension d'entrée continue (VE) aux moyens de régulation de tension ;
l'agencement de circuit comprenant des moyens de commande (5) ;
les moyens de commande et les moyens de régulation de tension étant construits sur un circuit intégré (1 ; 11) ;
dans lequel les moyens de commande dans le circuit intégré (1 ; 11) sont agencés de manière à générer un signal de commutation (S) pour mettre en route ou arrêter le convertisseur continu/continu (2 ; 12),
et dans lequel la tension d'entrée continue (VE) est directement appliquée sur une entrée du circuit intégré de sorte que le circuit intégré est toujours alimenté en énergie.

2. Agencement de circuit intégré selon la revendication 1, dans lequel le convertisseur continu/continu (2) est externe au circuit intégré (1).

3. Agencement de circuit intégré selon la revendication 1, dans lequel le convertisseur continu/continu (12) fait partie du circuit intégré (11).

4. Agencement de circuit selon les revendications 1, 2 ou 3, dans lequel la tension d'entrée continue (VE) a une valeur d'environ 42 volts et la tension fournie par le convertisseur continu/continu (2 ; 12) a une valeur d'environ 12 volts.
